# EUROPEAN PATENT APPLICATION

(11) **EP 4 246 280 A1**
(43) Date of publication of application: **20.09.2023**
(21) Application number: 23158978.9
(22) Date of filing: 28.02.2023
(51) Int. Cl.: G06F 1/16, G06F 3/01, G06F 3/16

(54) **WEARABLE DEVICE, INFORMATION PROCESSING SYSTEM, INFORMATION PROCESSING METHOD, AND CARRIER MEANS**

(30) Priority: 16.03.2022 JP 2022041751
(71) Applicant: Ricoh Company, Ltd., Tokyo 143-8555 (JP)
(72) Inventor: SATOH, Hiroyuki, Tokyo (JP); OGATA, Koretaka, Tokyo (JP); SHIMIZU, Kanta, Tokyo (JP); NAKAMURA, Naoto, Tokyo (JP)
(74) Representative: SSM Sandmair

(57) **Abstract**

A wearable device includes a first device (2) wearable by a user and a second device (3) wearable by the user. The first device (2) includes a surrounding image capturing unit (22, 400) to capture a surrounding image having an image capture range including a range out of a visual field of the user. The second device (3) includes a projection unit (40, 414) to project a projection image determined based on the surrounding image onto a projection destination determined based on the surrounding image.

## Description

### BACKGROUND

### Technical Field

Embodiments of the present disclosure relate to a wearable device, an information processing system, an information processing method, and carrier means.

### Related Art

In augmented reality (AR) in which digital information is superimposed on information of real world, smartphones or AR glasses are used as an information display device, for example.

For example, Japanese Patent No. 6437257 describes that a glass-type wearable terminal using an AR technology captures an AR marker using a camera of the glass-type wearable terminal and displays information based on the AR marker on the glass-type wearable terminal.

In a case of an information display device for AR according to a related art, a user may have difficulty to recognize digital information from real world information. A technology that can deal with such a situation and provide, to a user, real world information and digital information so as to be distinguishable from each other when the user recognizes the information has been desired.

### SUMMARY

An embodiment of the present disclosure includes a wearable device including a first device wearable by a user and a second device wearable by the user. The first device includes a surrounding image capturing unit to capture a surrounding image having an image capture range including a range out of a visual field of the user. The second device includes a projection unit to project a projection image determined based on the surrounding image onto a projection destination determined based on the surrounding image.

An embodiment of the present disclosure includes an information processing system including the above-described wearable device and an information processing apparatus communicably connected to the wearable device. The information processing apparatus obtains information on a position of the user based on the surrounding image, obtains a plurality pieces of information in relation to a position of the projection destination from a storage unit, and cause the projection image determined based on the information on the position of the user to be projected onto the projection destination determined based on the information on the position of the user and the information on the position of the projection destination.

An embodiment of the present disclosure includes an information processing method performed by a device wearable by a user. The method includes capturing a surrounding image having an image capture range including a range out of a visual field of the user, and projecting a projection image determined based on the surrounding image onto a projection destination determined based on the surrounding image.

An embodiment of the present disclosure includes a carrier means carrying computer readable codes for controlling a computer system to carry out the above-described method.

According to an embodiment of the present disclosure, real world information and digital information are provided in a manner that the real world information and the digital information are easily recognized and distinguished from each other by a user.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of an overview of an exemplary embodiment of the disclosure;
FIGS. 2A and 2B are diagrams each illustrating an example of a configuration of an information processing system according to the exemplary embodiment of the disclosure;
FIG. 3 is a block diagram illustrating an example of a hardware configuration of a wearable device according to the exemplary embodiment of the disclosure;
FIG. 4 is a block diagram illustrating an example of a hardware configuration of a computer according to the exemplary embodiment of the disclosure;
FIG. 5 is a block diagram illustrating an example of a functional configuration of the information processing system according to the exemplary embodiment of the disclosure;
FIG. 6 is a block diagram illustrating another example of a functional configuration of the information processing system according to the exemplary embodiment of the disclosure;
FIG. 7 is a flowchart illustrating an example of a process performed by the information processing system according to the exemplary embodiment of the disclosure;
FIG. 8 is a flowchart illustrating an example of a projection process according to the exemplary embodiment of the disclosure;
FIG. 9 is a flowchart illustrating an example of a process performed by the information processing system according to the exemplary embodiment of the disclosure;
FIG. 10 is a diagram illustrating an example of an overview of an operation assist system for assisting an operation at a construction site according to another embodiment of the disclosure;
FIG. 11 is a flowchart illustrating an example of a process performed by the operation assist system that assists an operation performed at the construction site according to the other embodiment of the disclosure;
FIG. 12 is a diagram illustrating an example of an overview of an operation assist system for assisting an operation at a facility maintenance management site according to still another embodiment of the disclosure;
FIG. 13 is a flowchart illustrating an example of a process performed by the operation assist system that assists an operation performed at the facility maintenance management site according to still the other embodiment of the disclosure;
FIG. 14 is a diagram illustrating an example of an overview of an operation assist system for assisting an operation performed by a plurality of members at a facility maintenance management site according to still the other embodiment of the disclosure;
FIGS. 15A and 15B are diagrams illustrating examples of projection images according to still the other embodiment of the disclosure; and
FIG. 16 is a diagram illustrating examples of a projection image according to an embodiment of the disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An exemplary embodiment of the present disclosure is described below with reference to the attached drawings.

### Overview

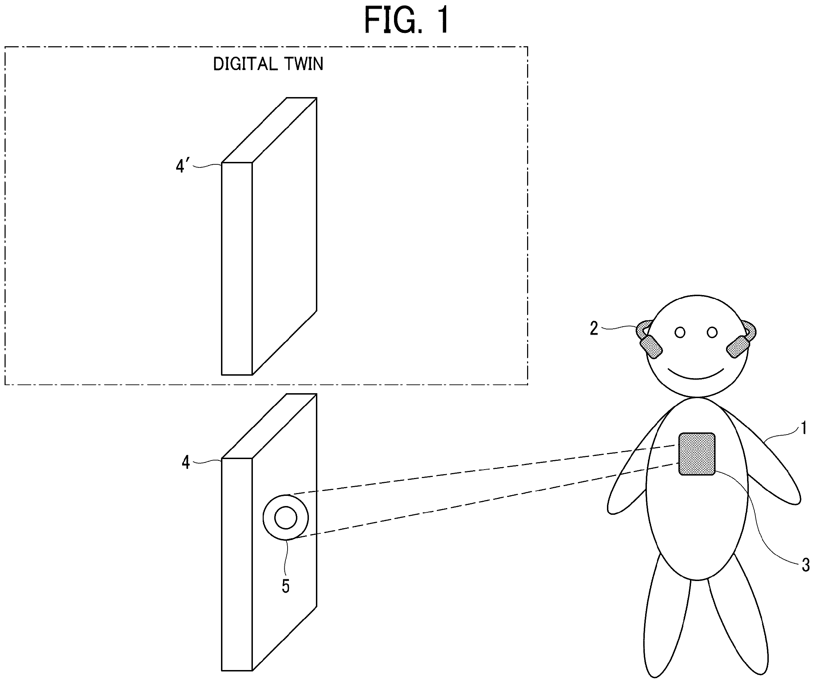

FIG. 1 is a diagram illustrating an example of an overview of the present embodiment. A user 1 wears one or more wearable devices. In the example of FIG. 1, the user 1 wears a head wearable device 2 and a body wearable device 3. FIG. 1 illustrates the embodiment in which the user 1 wears two wearable devices as an example. In some embodiments, the user wears one wearable device or three or more wearable devices. For example, the head wearable device 2 and the body wearable device 3 may be integrated.

The head wearable device 2 acquires information on a position of the user 1. The head wearable device 2 is a device worn on a head or a part of the head of a user, and may have a device form to be worn by a user on his or her ear. The head wearable device 2 has a function of capturing a surrounding image of the user 1 as a function of acquiring information on the position of the user 1. The function of capturing the surrounding image of the user 1 captures a surrounding image corresponding to an image capture rang that includes a range out of the visual field of the user 1. The head wearable device 2 has a function of measuring a posture of the user 1 and a change in the posture as a function of acquiring information on the position of the user 1. The head wearable device 2 may have a function of an electrooculography sensor that measures a direction of line of sight of the user 1 or a global positioning system (GPS) function, as a function of acquiring the information on the position of the user 1.

Human vision is generally considered to accurately recognize an object within an effective visual field of approximately ± 10 degrees in a horizontal direction and approximately ± 10 degrees in a vertical direction with respect to a direction of line of sight. Human vision is further considered to recognize an object within a stable visual field of approximately ± 55 degrees in the horizontal direction and approximately ± 35 degrees in the vertical direction without being conscious of the object. Human vision is further considered not to recognize an object being in a range exceeding ± 55 degrees in the horizontal direction and ± 60 degrees in the vertical direction with respect to the direction of line of sight. The surrounding image captured by the head wearable device 2 is a surrounding image of the user 1 having a range including an area out of the effective visual field. In some embodiments, an image capture range of the surrounding image may include an area out of the stable visual field. In some embodiments, an image capture range may be set to an omnidirectional panoramic range or a full spherical range to include a range exceeding ± 55 degrees in the horizontal direction and ± 60 degrees in the vertical direction with respect to the direction of line of sight.

The body wearable device 3 acquires digital information from a storage device based on the information on the position of the user 1. The digital information is used to get the attention of the user 1 and is visually recognized by the user 1, accordingly. The body wearable device 3 is a device worn by a user on a part of his or her body, or torso, and may have a device form to be worn by a user on his or her chest.

The digital information that is to get attention of the user 1 and is visually recognized by the user 1 is included in information of digitalized real world, called a Digital Twin. Such information of digitalized real world may be referred to as digitized real world information. The information on a digitalized real world may be referred to as digitized real world information. For example, the Digital Twin is an information set of a plurality pieces of information in which states of buildings and things including three dimensional (3D) information are digitized. The digital information to be visually recognized by the user 1 is, for example, information associated with information on the position of the user 1 in the Digital Twin.

The body wearable device 3 acquires projection destination information that is information on a projection destination 4 onto which acquired digital information is projected. The projection destination in the description includes an object, or a targeted object, onto which an image, or information, to be projected is projected. The projection destination may be referred to as a projection destination object. For example, in the Digital Twin, information 4' that is information related to the projection destination 4 in the real world is stored in association with the information on the position of the user 1. The body wearable device 3 has a projection function such as a projector, and projects a projection image 5, which is imaged, onto the projection destination 4 in the real world.

The projection image 5 projected onto the projection destination 4 by the projector included in the body wearable device 3 in the real world is, for example, augmented reality (AR) information such as a mark indicating an object or a target place that the user 1 is desired to be caused to visually recognize in the real world as illustrated in FIG. 1. The projection image 5 projected onto the projection destination 4 by the projector included in the body wearable device 3 in the real world may be AR information such as information desired to be visually recognized by the user 1.

As illustrated in FIG. 1, in the present embodiment, the projector included in the wearable device worn by the user 1 projects the projection image 5 onto the projection destination 4 in the real world, thereby the AR information can be displayed in the real world. The wearable device according to the present embodiment serves as an AR projector.

For example, in a case of displaying the AR information by a smartphone, the AR information is superimposed and displayed on a target area in an image captured by directing the built-in camera by the user 1. The image captured by directing the built-in camera by the user 1 is an image of which an image capture range is within the visual field of the user 1. In such a case of displaying the AR information by a smartphone, a visual field in which the AR information can be superimposed and displayed is narrow. Due to this, the AR information provided may not be easily recognizable by the user 1.

In addition, in a case of displaying the AR information by AR glasses, the AR information is superimposed and displayed on a transparent display with which information of the real world, or real world information, is visually recognized. Due to this, the AR information provided may not be easily recognizable by the user 1. In addition, in such a case of displaying the AR information by AR glasses, the real world information is visually recognized through the transparent display, the visual field is obstructed, and this deteriorates the visibility. In addition, the weight of such AR glasses is limited, because the weight effects on the wearing feeling.

According to the present embodiment, the head wearable device 2 captures a surrounding image having an image capture range including a range out of the visual field of the user 1, and determines the projection destination 4 and the projection image 5 based on the surrounding image as described later. According to the present embodiment, the AR information can be displayed so as to be easily recognized by the user 1 by causing the body wearable device 3 to project the AR information according to the projection destination 4 and the projection image 5, which are determined. In addition, according to the present embodiment, by projecting the projection image 5 onto the projection destination 4, the AR information can be displayed in the real world in a manner that the AR information can be visually recognized by another person other than the user 1 wearing the wearable device.

### System Configuration

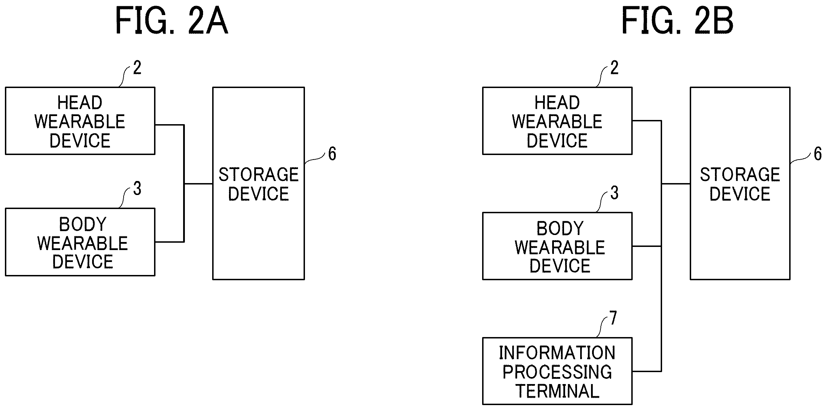

FIGS. 2A and 2B are diagrams each illustrating an example of a configuration of an information processing system according to the present embodiment. The example of FIG. 2A illustrates a system configuration that includes the head wearable device 2, the body wearable device 3, and a storage device 6 that are connected to each other so as to establish data communication. The example of FIG. 2B illustrates a system configuration that includes the head wearable device 2, the body wearable device 3, the storage device 6, and an information processing terminal 7 that are connected to each other so as to establish data communication.

The head wearable device 2 and the body wearable device 3 are substantially the same as those illustrated in FIG. 1. The storage device 6 stores information used for displaying AR information including information on a digitized real world that is referred to as a Digital Twin, for example. The storage device 6 may be included in the head wearable device 2 or may be included in the body wearable device 3. The storage device 6 may be implemented by a cloud, or may be included in a personal computer (PC).

The information processing terminal 7 is owned by the user 1 and includes a PC, a mobile phone, a smartphone, a tablet terminal, a game machine, and a personal digital assistant (PDA). The information processing terminal 7 may be a PC on a cloud. The information processing terminal 7 is an example of an information processing apparatus.

The storage device 6 may be included in the information processing terminal 7. In addition, the information processing terminal 7 may implement at least a part of the functions of the head wearable device 2 or the body wearable device 3.

### Hardware Configuration

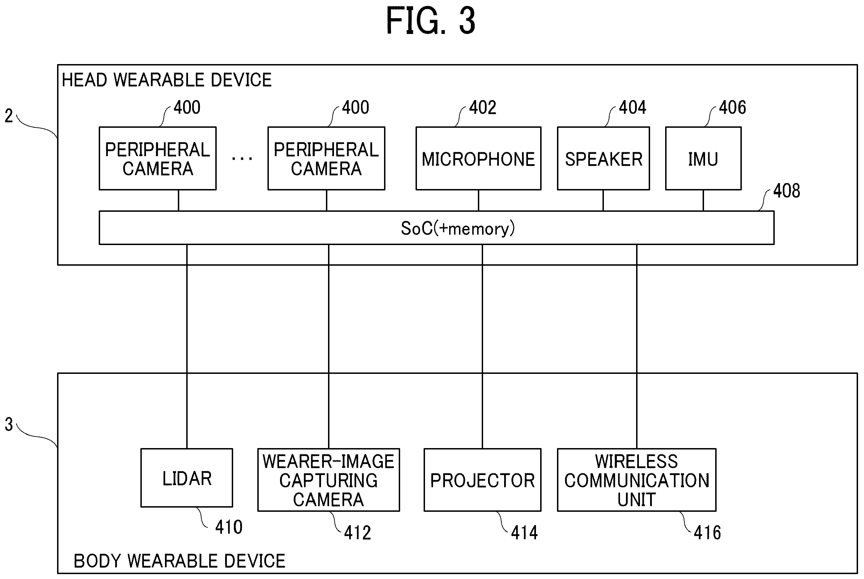

FIG. 3 is a block diagram illustrating an example of a hardware configuration of a wearable device according to the present embodiment. The example of FIG. 3, the wearable device worn by the user 1 includes the head wearable device 2 and the body wearable device 3 that are separated from each other. However, this is not limiting of the disclosure, and in some embodiments, a configuration of the wearable device may be divided into three or more devices or may be integrated into one device.

The head wearable device 2 includes a plurality of peripheral cameras 400, a microphone 402, a speaker 404, an inertial measurement unit (IMU) 406, and a system-on-a-chip (SoC) 408. The body wearable device 3 includes a Lidar 410, a wearer-image capturing camera 412, a projector 414, and a wireless communication unit 416.

The peripheral camera 400 is an example of an image capturing unit that captures a surrounding image of the user 1, and includes, for example, a lens and an imaging element. The surrounding image of the user 1 is an image of surrounding of the user 1. As such the peripheral camera 400, for example, a digital camera that can obtain a 360-degree full spherical image or an omnidirectional panoramic image by one shot may be used. The peripheral camera 400 is used to obtain information used for environment recognition and position estimation. For the position estimation, visual simultaneous localization and mapping (VSLAM) can be used. The VSLAM is a technique for performing selflocalization and environment map creation based on a surrounding image. The position estimation by the VSLAM can be performed by feature matching of surrounding environment. In addition, the peripheral camera 400 captures a surrounding image in a manner that the image capture range includes a range out of the visual field of the user 1. By including the range out of the visual field of the user 1 in the surrounding image, information of a range that is not visually recognized by the user 1 can be obtained.

The microphone 402 collects the ambient sound of the user 1 and voice of the user 1. The speaker 404 outputs a voice guide to the user 1 or notifies the user 1 of a warning sound, for example. The microphone 402 and the speaker 404 are used according to a usage scene, for example, when the user 1 exchanges information with an assistant by voice, or when the user 1 receives notification by a warning sound. For example, a reaction speed of the user 1 to a near miss or a minor incident is faster when sound information is transmitted than when visual information is transmitted. The near miss or the minor incident includes, for example, a sudden event or a mistake that causes a user to be frightened.

The IMU 406 is an inertial measurement unit that measures a posture of the user 1 wearing the head wearable device 2 and changes in the posture. The IMU 406 measures a change in the orientation of the head (face direction) of the user 1 wearing the head wearable device 2. For example, the change in the orientation of the head of the user 1 can be used to estimate an amount of movement by calculating the number of steps based on an amount of vertical movement of the orientation of the head of the user 1. In addition, the change in the orientation of the head of the user 1 can be used to estimate degree of concentration of the user 1 based on an amount of change in the orientation of the head of the user 1 in the vertical and horizontal directions. In addition, the change in the orientation of the head of the user 1 can be used to estimate a line of sight of the user 1 based on the change in the orientation of the head of the user 1.

The Lidar 410 is provided with a light emitting unit and a light receiving unit, and measures a shape of an object or a distance to the object by remote sensing using light. The Lidar 410 can obtain, in real time, distance information and surface information that are information on a distance and a surface with respect to changes in the posture of the user 1 or changes in the positional relationship between the user 1 and the projection destination 4. For example, a change in the posture of the user 1 or a change in the positional relationship with the projection destination 4 can be used for accurate dynamic mapping of the projection image 5 onto the projection destination 4. In addition, since the Lidar 410 can measure a shape of a projection surface of the projection destination 4, the projection image 5 can be accurately mapped according to the shape of the projection surface of the projection destination 4 even when the projection surface of the projection destination 4 is inclined with respect to the projector 414 or when the projection surface has an uneven shape. For dynamic mapping of the projection image 5 onto the projection destination 4, real time correction may be performed based on the surrounding image of the user 1 captured by the peripheral camera 400.

The wearer-image capturing camera 412 is an example of an image capturing unit that captured an image of the user 1 and includes, for example, a lens and an imaging element. For example, an image of the face of the user 1 captured by the wearer-image capturing camera 412 can be used for estimation for a state of the user 1 including a careless state and a concentration state, or estimation for a line of sight of the user 1. In addition, the accuracy of the line-of-sight estimation can be improved by multiplication with information measured by the IMU 406.

The projector 414 is an example of a projection unit that projects the projection image 5 onto the projection destination 4, and includes, for example, a lens and a light emitting unit. The projector 414 performs projection using a laser and a projection direction shift mechanism (MEMS). The projector 414 can correct positional shift of a projection position using a mirror angle of the MEMS based on the surrounding image and the information measured by the Lidar 410. When the projection surface of the projection destination 4 changes, the projector 414 performs feedback by controlling an angle of shift of the MEMS and superimposes the projection image 5 on the projection surface.

The wireless communication unit 416 performs data communication with the storage device 6 and the information processing terminal 7, for example. The wireless communication unit 416 may be provided to the head wearable device 2.

The SoC 408 includes, for example, a CPU, a memory, a peripheral IF circuits, and an artificial intelligence (AI) accelerator. The SoC 408 is connected to the plurality of peripheral cameras 400, the microphone 402, the speaker 404, the IMU 406, the Lidar 410, the wearer-image capturing camera 412, the projector 414, and the wireless communication unit 416 so that data can be communicated, and performs various processes, which are described later, for projecting the projection image 5 on the projection destination 4. A part of the various processes performed by the SoC 408 may be performed by the information processing terminal 7. For example, by performing a part of the various processes, which is supposed to be performed by the SoC 408, by the information processing terminal 7, the SoC 408 can reduce an amount of calculation, and this contributes to cost reduction and power saving of the wearable device.

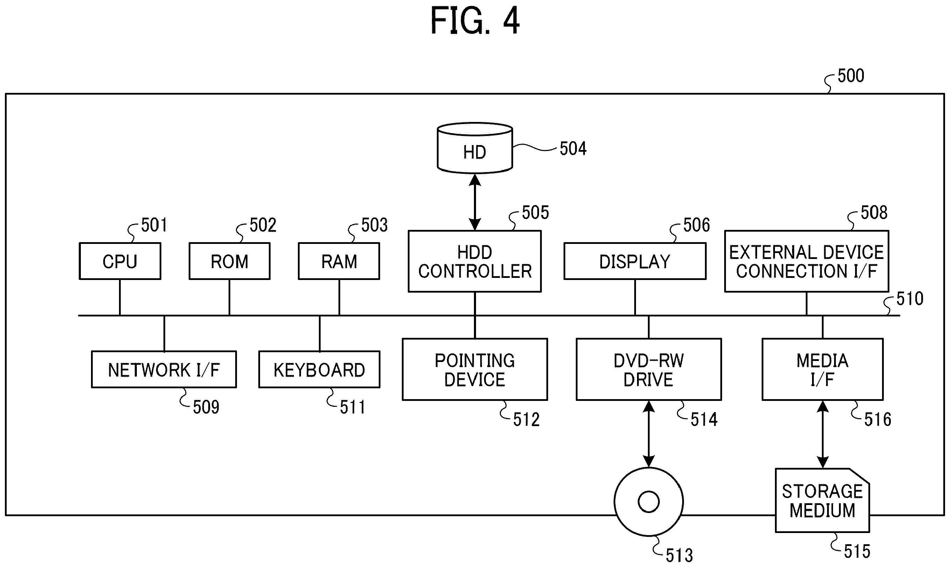

The storage device 6 may be mounted on the wearable device having the hardware configuration illustrated in FIG. 3. In addition, the storage device 6 may be implemented in, for example, a computer 500 having a hardware configuration as illustrated in FIG. 4 or the computer 500 having the hardware configuration as illustrated in FIG. 4 on a cloud. FIG. 4 is a block diagram illustrating an example of a hardware configuration of a computer according to the present embodiment. When the information processing terminal 7 is a PC, the hardware configuration is as illustrated in FIG. 4.

The computer 500 includes a central processing unit (CPU) 501, a read only memory (ROM) 502, a random access memory (RAM) 503, a hard disk (HD) 504, a hard disk drive (HDD) controller 505, a display 506, an external device connection interface (I/F) 508, a network I/F 509, a data bus 510, a keyboard 511, a pointing device 512, a digital versatile disk rewritable (DVD-RW) drive 514, and a media I/F 516.

The CPU 501 is a processor that performs overall control of the computer 500 according to a program. The ROM 502 stores programs such as an initial program loader (IPL) to boot the CPU 501. The RAM 503 is used as a work area for the CPU 501. The HD 504 stores various data such as a program. The HDD controller 505 controls reading and writing of various data from and to the HD 504 under control of the CPU 501.

The display 506 displays various information such as a cursor, a menu, a window, a character, or an image. The external device connection I/F 508 is an interface for connecting various external devices. The external device in this case is, for example, a Universal Serial Bus (USB) memory. The network I/F 509 is an interface for data communication using a network. Examples of the data bus 510 include, but not limited to, an address bus and a data bus that electrically connect the components, such as the CPU 501, with one another.

The keyboard 511 is one example of an input device provided with a plurality of keys for allowing a user to input characters, numerals, or various instructions. The pointing device 512 is an example of an input device that allows a user to select or execute a specific instruction, select a target for processing, or move a cursor being displayed. The DVD-RW drive 514 reads and writes various data from and to a DVD-RW 513, which is an example of a removable recording medium. The removable storage medium is not limited to the DVD-RW and may be a Digital Versatile Disc-Recordable (DVD-R) or the like. The media I/F 516 controls reading and writing (storing) of data from and to a recording medium 515 such as a flash memory.

The hardware configuration illustrated in FIG. 4 is just one example, and the hardware configuration may not include all of the hardware components illustrated in FIG. 4, or may include any other hardware components than the ones illustrated in FIG. 4. There are various hardware configurations in a case where the information processing terminal 7 of FIG. 2 is other than a PC, and diagrams of the hardware configurations in such a case are omitted.

### Functional Configuration:

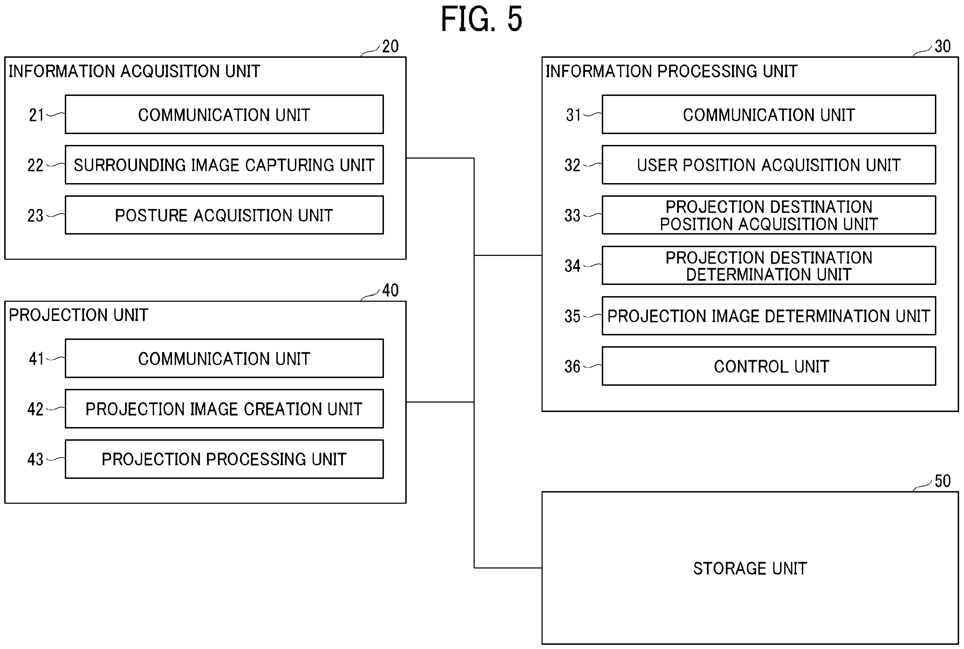

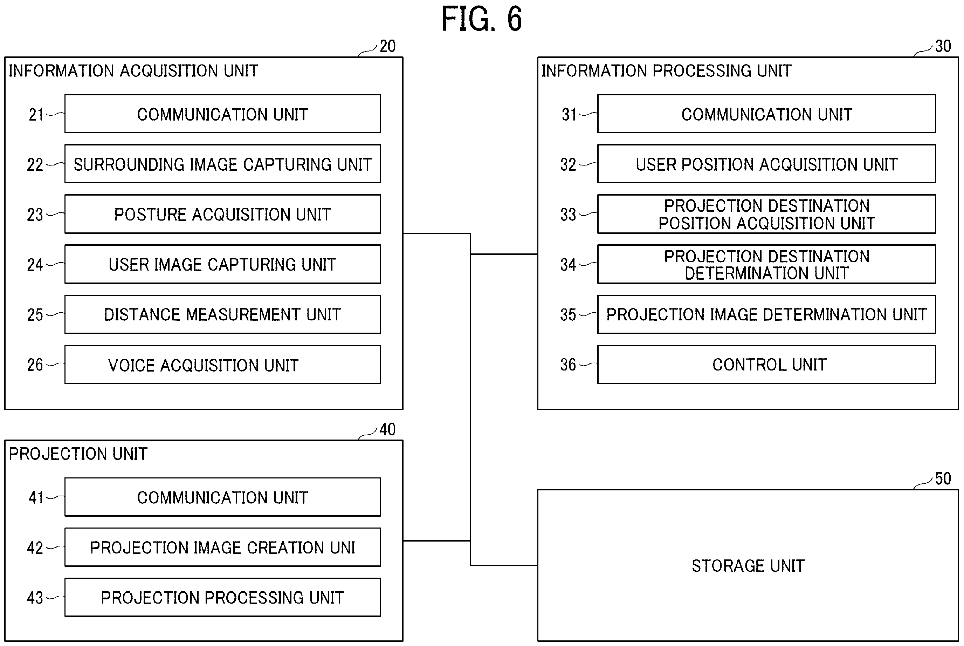

FIGS. 5 and 6 are diagrams each illustrating an example of a functional configuration of the information processing system according to the present embodiment. The information processing system according to the present embodiment includes an information acquisition unit 20, an information processing unit 30, a projection unit 40, and a storage unit 50. The information acquisition unit 20, the information processing unit 30, the projection unit 40, and the storage unit 50 illustrated in FIGS. 5 and 6 are implemented by the head wearable device 2, the body wearable device 3, and the storage device 6 illustrated in FIG. 2 operating in cooperation with various programs. Alternatively, the information acquisition unit 20, the information processing unit 30, the projection unit 40, and the storage unit 50 illustrated in FIGS. 5 and 6 may be implemented by the head wearable device 2, the body wearable device 3, the storage device 6, and the information processing terminal 7 illustrated in FIG. 2 operating in cooperation with various programs.

The functional configurations of FIGS. 5 and 6 are described below. The information acquisition unit 20 in FIG. 5 includes a communication unit 21, a surrounding image capturing unit 22, and a posture acquisition unit 23. The surrounding image capturing unit 22 captures an image that is a surrounding image corresponding to the image capture range including a range out of the visual field of the user 1. The surrounding image capturing unit 22 captures a surrounding image of the user 1 by using the peripheral camera 400. The posture acquisition unit 23 acquires information on a posture of the user 1. For example, by using the IMU 406 and the wearer-image capturing camera 412, the posture acquisition unit 23 acquires information on the posture, a change in the posture, and a line of sight of the user 1 as information on the posture of the user 1. The communication unit 21 performs data communication with the information processing unit 30, the projection unit 40, and the storage unit 50.

The information processing unit 30 includes a communication unit 31, a user position acquisition unit 32, a projection destination position acquisition unit 33, a projection destination determination unit 34, a projection image determination unit 35, and a control unit 36. The user position acquisition unit 32 estimates a position of the user 1 based on the surrounding image of the user 1 received from the information acquisition unit 20 and information in the storage unit 50. In addition, the user position acquisition unit 32 may estimate the position of the user 1 by further using the information on the posture of the user 1. To estimate the position of the user 1, environment recognition and position estimation by VSLAM may be used. In addition, estimation for an amount of movement of the user 1 by IMU 406 may be used to estimate the position of the user 1.

Based on the surrounding image of the user 1 received from the information acquisition unit 20 and the information in the storage unit 50, the projection destination position acquisition unit 33 acquires information on a position of the projection destination 4 that is a target object onto which the projection image 5 is to be projected. The projection destination determination unit 34 determines a projection destination by performing a projection destination detection process based on information on the Digital Twin stored in the storage unit 50 and the surrounding image. In addition, the projection image determination unit 35 determines content to be projected by a process for detecting the content to be projected, based on the information on the Digital Twin in the storage unit 50 and the surrounding image of the user 1. The projection image determination unit 35 acquires projection information that is information associated with the projection destination 4 determined by the projection destination determination unit 34 as the content to be projected on the projection destination 4. The surrounding image of the user 1 includes an area out of the visual field of the user 1. Accordingly, the projection destination determination unit 34 can determine a projection object using image information that is information on the area that is not visually recognized by the user 1. Similarly, the projection image determination unit 35 can determine a projection image using image information that is the information on the area that is not visually recognized by the user 1. As described above, the projection destination determination unit 34 and the projection image determination unit 35 can determine an appropriate projection destination and an appropriate projection image based on the information on the area that is not visually recognized by the user 1 by using the information on the area out of the visual field of the user 1.

The control unit 36 controls the projection unit 40 such that the projection image 5 corresponding to the projection information acquired by the projection image determination unit 35 is projected onto a projection area of the projection destination 4 determined by the projection destination determination unit 34. The control unit 36 performs follow-up control for the projection area so that the projection image 5 does not shift from the projection area of the projection destination 4 due to movement of the user 1. For example, the control unit 36 performs follow-up control by IMU 406 and AI so that the projection image 5 does not shift from the projection area of the projection destination 4 due to the movement of the user 1. The communication unit 31 performs data communication with the information acquisition unit 20, the projection unit 40, and the storage unit 50.

The projection unit 40 includes a communication unit 41, a projection image creation unit 42, and a projection processing unit 43. The projection image creation unit 42 converts the projection information received from the information processing unit 30 into an image. In addition, the projection image creation unit 42 may perform adjustment such as varying or changing a shape of the projection image 5 that is received from the information processing unit 30 and to be projected on the projection destination 4. The adjustment such as varying or changing a shape of the projection image 5 includes, for example, keystone correction. The projection image creation unit 42 may adjust the projection image 5 according to a shape of the projection destination 4 (a shape of the projection surface) by using a known projection mapping technique, for example.

Projection mapping is a technique in which an image to be projected is varied according to a projection surface of a projected object so that the projection image appears as if the projection image is pasted onto the projection destination. In a projection mapping, a more natural projection image can be projected onto a projection destination by adjusting color and brightness of an image to be projected according to color and brightness of a projection surface.

In this way, the projection image 5 adjusted by using such a projection mapping technique is projected by the projection processing unit 43 so as to be pasted onto the projection destination 4.

The projection processing unit 43 projects the projection image 5 imaged by the projection image creation unit 42 onto the projection destination 4 determined by the information processing unit 30. The communication unit 41 performs data communication with the information acquisition unit 20, the information processing unit 30, and the storage unit 50.

The storage unit 50 stores information used by the information processing system according to the present embodiment to implement display of AR information in the real world. The information used for implementing the display of the AR information in the real world includes, for example, AR information for assisting an action taken by the user 1, information on the projection destination 4 on which the AR information is projected, a three dimensional map of surrounding environment of the user 1, and information indicating a shape and material of the projection destination 4.

The functional configuration illustrated in FIG. 5 is an example, and each functional unit illustrated in the information acquisition unit 20, the information processing unit 30, and the projection unit 40 may be implemented in any one of the information acquisition unit 20, the information processing unit 30, and the projection unit 40. The storage unit 50 may be included in any one of the information acquisition unit 20, the information processing unit 30, and the projection unit 40.

The information acquisition unit 20 illustrated in FIG. 6 includes the communication unit 21, the surrounding image capturing unit 22, the posture acquisition unit 23, a user image capturing unit 24, a distance measurement unit 25, and a voice acquisition unit 26. Since almost all of the functional units in the functional configuration of FIG. 6 are substantially the same as the functional configuration of FIG. 5 except for a part, the description thereof is omitted as appropriate. The communication unit 21, the surrounding image capturing unit 22, and the posture acquisition unit 23 are substantially the same as those in FIG. 5.

The user image capturing unit 24 captures an image of the user 1. The user image capturing unit 24 may capture an image of the user 1 by using the wearer-image capturing camera 412. The image of the user 1 captured by the user image capturing unit 24 includes an image of a facial expression of the user 1 or an image of a gesture of the user 1.

The distance measurement unit 25 measures a shape of an object around the user 1 or a distance to the object around the user 1 by using the Lidar 410. The object around the user 1 includes the projection destination 4. In addition, by using the Lidar 410, the distance to the projection destination 4 can be obtained even when the information on the Digital Twin used by the projection destination determination unit 34 indicates a distance that is different from an actual distance to the projection destination 4. The voice acquisition unit 26 acquires voice, or voice data, of the user 1 by using the microphone 402.

The functional configuration of the information processing unit 30 is substantially the same as that illustrated in FIG. 5. The user position acquisition unit 32 may estimate the position of the user 1 by further using the image of the user 1. The image of the user 1 including the image of the facial expression of the user 1 or the image of the gesture of the user 1 can be used to determine the projection destination and the content to be projected.

The user position acquisition unit 32 may estimate the position of the user 1 by further using the shape of the object around the user 1 such as the projection destination 4 or the distance to the object around the user 1. The user position acquisition unit 32 may estimate the position of the user 1 by further using the voice of the user 1.

The projection destination position acquisition unit 33 may further use the image of the user 1 received from the information acquisition unit 20 to acquire information on the position of the projection destination 4, which is a target object, onto which the projection image 5 is to be projected. The projection destination position acquisition unit 33 may further use the shape of the object around the user 1 or the distance to the object around the user 1 received from the information acquisition unit 20 to acquire the information on the position of the projection destination 4, which is a target object, onto which the projection image 5 is projected. The projection destination position acquisition unit 33 may further use the voice of the user 1 received from the information acquisition unit 20 to acquire information on the position of the projection destination 4, which is a target object, onto which the projection image 5 is to be projected.

The projection destination determination unit 34 may determine the projection destination by a detection process further using the image of the user 1 received from the information acquisition unit 20. The projection destination determination unit 34 may determine the projection destination by a detection process further using the shape of the object around the user 1 or the distance to the object around the user 1 received from the information acquisition unit 20. The projection destination determination unit 34 may determine a projection destination by a detection process further using the voice of the user 1 received from the information acquisition unit 20.

In addition, the projection image determination unit 35 may determine the content to be projected by a detection process further using the image of the user 1 received from the information acquisition unit 20. The projection image determination unit 35 may determine the content to be projected by a detection process further using the shape of the object around the user 1 or the distance to the object around the user 1 received from the information acquisition unit 20. The projection image determination unit 35 may determine the content to be projected by a detection process further using the voice of the user 1 received from the information acquisition unit 20.

Since the functional configuration of the projection unit 40 is substantially the same as that of FIG. 5, a description thereof is omitted. The functional configuration illustrated in FIG. 6 is an example, and each functional unit illustrated in the information acquisition unit 20, the information processing unit 30, and the projection unit 40 may be implemented in any one of the information acquisition unit 20, the information processing unit 30, and the projection unit 40. The storage unit 50 may be included in any one of the information acquisition unit 20, the information processing unit 30, and the projection unit 40.

The functional configurations of FIGS. 5 and 6 are examples, and a combination of the functional configurations of FIGS. 5 and 6 may be used. For example, the information acquisition unit 20 may have a functional configuration that does not include the posture acquisition unit 23, the user image capturing unit 24, the distance measurement unit 25, and the voice acquisition unit 26. In addition, the information acquisition unit 20 may have a functional configuration that includes any one or more of the posture acquisition unit 23, the user image capturing unit 24, the distance measurement unit 25, and the voice acquisition unit 26.

### Process

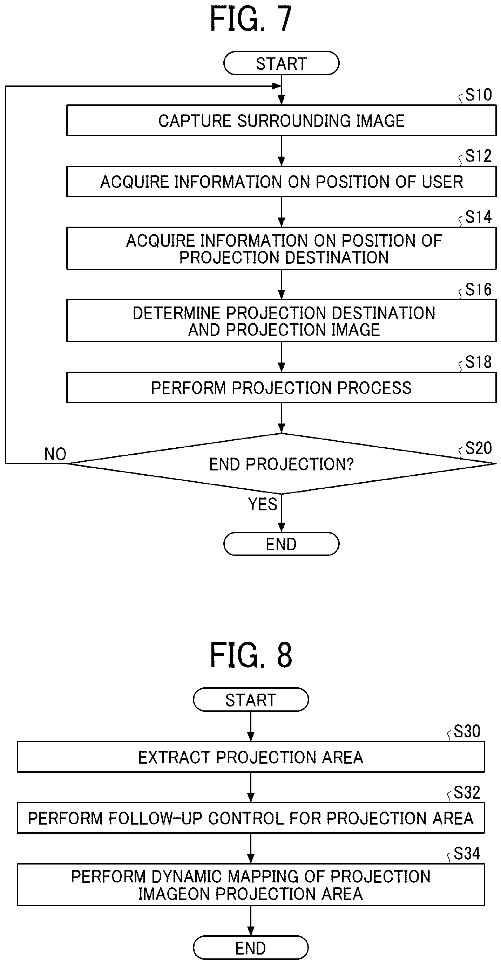

FIG. 7 is a flowchart illustrating an example of a process performed by the information processing system according to the present embodiment. In the following description, the functional configuration of FIG. 5 is used as an example. The flowchart of FIG. 7 is an example in which the projection destination 4 for the AR information and the projection image 5 to be projected on the projection destination are registered in advance. For example, the flowchart of FIG. 7 corresponds to a process performed when the user 1 approaches the projection destination 4, and the projection image 5 is projected on the projection area of the projection destination 4, accordingly.

In step S10, the information acquisition unit 20 captures a surrounding image of the user 1. In addition, the information acquisition unit 20 acquires information on a posture of the user 1. The information acquisition unit 20 transmits the surrounding image of the user 1 and the information on the posture of the user 1 to the information processing unit 30.

In step S12, the information processing unit 30 acquires information on a position of the user 1 based on the surrounding image of the user 1 and the information on the posture of the user 1, which are received. For example, the information on the position of the user 1 includes information obtained from the surrounding image of the user 1 and the information on the posture of the user 1, and information obtained by performing environment recognition and position estimation based on the obtained information. In step S14, the information processing unit 30 acquires information on a position of the projection destination 4, which is a target object, onto which the projection image 5 is to be projected, based on the information on the position of the user 1 and the information on the Digital Twin in the storage unit 50.

In step S16, the information processing unit 30 determines the projection destination 4, which is a target object, onto which the projection image 5 is to be projected, based on the information on the Digital Twin stored in the storage unit 50 and the information on the position of the user 1. For example, in step S16, the projection destination 4 within a predetermined range from the user 1 is determined based on the information on the position of the projection destination 4 acquired in step S14.

In step S16, the information processing unit 30 determines the projection image 5 to be projected on the projection destination 4, which is a target object, based on the information on the Digital Twin in the storage unit 50 and the information on the position of the user 1. In step S16, the projection image 5 associated with a target object that is the projection destination 4 is determined, for example.

In step S18, the information processing unit 30 controls the projection unit 40 so that the projection image 5 is projected onto the projection destination 4 determined in step 516. The processing of steps S10 to S18 is repeated until the user 1 performs an operation to end the projection. The projection process in step S18 is performed, for example, according to a process illustrated in FIG. 8.

FIG. 8 is a flowchart illustrating an example of a projection process according to the present embodiment. In step S30, the information processing unit 30 extracts a projection area on which the projection image 5 is to be projected. The projection area is, for example, an area of the projection surface of the projection destination 4 onto which the projection image 5 is to be projected.

In step S32, the information processing unit 30 performs follow-up control for the projection area so that the projection image 5 is projected on the projection area of the projection destination 4 extracted in step S30. By the follow-up control for the projection area in step S32, the information processing unit 30 performs control so that the projection image 5 does not shift from the projection area of the projection destination 4 due to movement of the user 1. When the projection area of the projection destination 4 is lost in the follow-up control for the projection area, the information processing unit 30 suspends the projection processing until another projection area of the projection destination 4 is extracted.

In step S34, the information processing unit 30 performs dynamic mapping of the projection image 5 on the projection area of the projection destination 4 extracted in step S30. For example, the information processing unit 30 can adjust the projection image 5 according to a shape of the projection area of the projection destination 4 and project the adjusted projection image 5 onto the projection destination 4 by using a known projection mapping technique, for example.

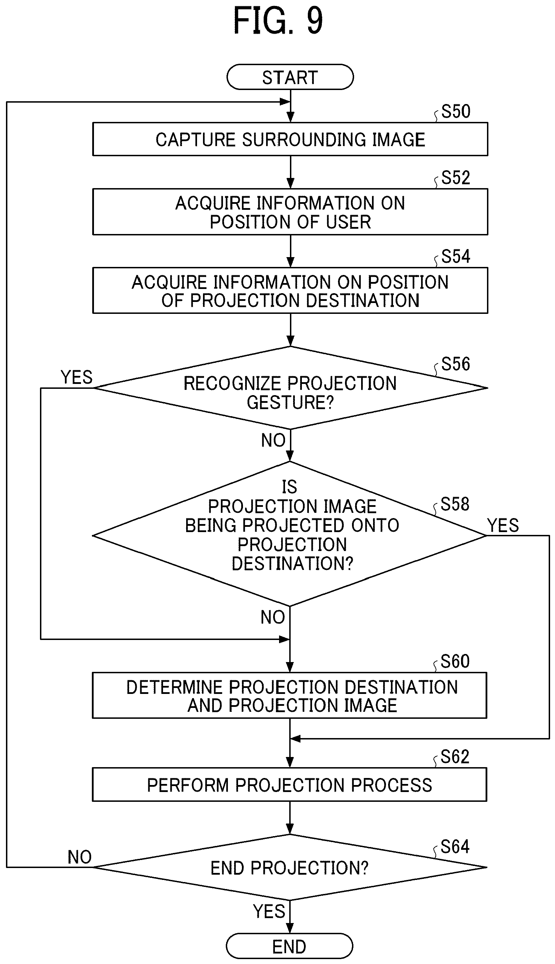

FIG. 9 is a flowchart illustrating an example of a process performed by the information processing system according to the present embodiment. In the following description, the functional configuration of FIG. 6 is used as an example. The flowchart of FIG. 9 is an example in which the projection destination 4 for the AR information and the projection image 5 to be projected on the projection destination are registered in advance. For example, the flowchart of FIG. 9 corresponds to a process performed when the user 1 approaches the projection destination 4, and the projection image 5 is projected on the projection area of the projection destination 4, accordingly.

In step S50, the information acquisition unit 20 captures a surrounding image of the user 1. In addition, the information acquisition unit 20 acquires information on a posture of the user 1. In addition, the information acquisition unit 20 acquires an image of the user 1. The information acquisition unit 20 further acquires a shape of an object around the user 1, such as the projection destination 4, or a distance to the object around the user 1. The information acquisition unit 20 also acquires voice of the user 1. The information acquisition unit 20 transmits the surrounding image of the user 1 and the information on the posture of the user 1 to the information processing unit 30. In addition, the information acquisition unit 20 transmits the image of the user 1, the shape of the object around the user 1, the distance to the object around the user 1, and the voice of the user to the information processing unit 30.

In step S52, the information processing unit 30 acquires information on the position of the user 1 based on the received surrounding image of the user 1, the information on the posture of the user 1, the image of the user 1, the shape of the object around the user 1, the distance to the object around the user 1, and the voice of the user 1. For example, the information on the position of the user 1 includes information obtained from the surrounding image of the user 1, information on the posture of the user 1, the image of the user 1, the shape of the object around the user 1, the distance to the object around the user 1, and the voice of the user, and information obtained by performing environment recognition and position estimation based on the obtained information.

In step S54, the information processing unit 30 acquires information on a position of the projection destination 4 onto which the projection image 5 is to be projected, based on the information on the position of the user 1 and the information on the Digital Twin in the storage unit 50. In step S56, the information processing unit 30 performs gesture recognition based on the image of the user 1 and determines whether the user 1 has made a gesture for projection, namely a projection gesture, or not. The gesture recognition may include processing for recognizing an action of the user 1 other than the projection gesture for starting projection. For example, the action of the user 1 other than the projection gesture for starting projection includes, for example, a gesture for confirmation of the projection destination 4 and a gesture for starting an action with respect to the projection destination 4.

If the action of the user 1 is the projection gesture, the information processing unit 30 performs processing of step S60. In step S60, the information processing unit 30 determines the projection destination 4 onto which the projection image 5 is to be projected, based on the information on the Digital Twin in the storage unit 50 and the information on the position of the user 1. For example, in step S60, the projection destination 4 within a predetermined range from the user 1 is determined based on the information on the position of the projection destination 4 acquired in step S54.

In step S60, the information processing unit 30 determines the projection image 5 to be projected on the projection destination 4 based on the information on the Digital Twin in the storage unit 50 and the information on the position of the user 1. In step S60, the projection image 5 associated with a target object that is the projection destination 4 is determined, for example.

In step S62, the information processing unit 30 controls the projection unit 40 so that the projection image 5 is projected onto the projection destination 4 determined in step S60. If the action of the user 1 is not a projection gesture in step S56, the process proceeds to step S58 and the information processing unit 30 determines whether the projection image 5 is being projected onto the projection destination 4 or not is determined.

If the projection image 5 is not being projected onto the projection destination 4, the process proceeds to the process of step S60, the information processing unit 30 determines the projection image 5 to be projected onto the projection destination 4, and then performs processing of step S62. In step S62, the information processing unit 30 controls the projection unit 40 so that the projection image 5 is projected onto the projection destination 4 determined.

If the projection image 5 is being projected onto the projection destination 4, the information processing unit 30 skips the processing of step S60 and performs the processing of step S62. In step S62, the information processing unit 30 controls the projection unit 40 so that the projection image 5 being projected continues to be projected onto the projection destination 4. The processing of steps S50 to S62 is repeated until the user 1 performs an operation to end the projection.

The projection process of step S62 is performed, for example, in substantially the same manner as the process illustrated in FIG. 8. In step S30, the information processing unit 30 extracts a projection area on which the projection image 5 is to be projected. In step S32, the information processing unit 30 performs follow-up control for the projection area so that the projection image 5 is projected on the projection area of the projection destination 4 extracted in step S30.

The accuracy of the follow-up control for the projection area can be improved by using the surrounding image of the user 1, information on the posture of the user 1, the image of the user 1, or the information obtained based on the shape of the object around the user 1, the distance to the object around the user 1, or the voice of the user 1, for example.

By the follow-up control for the projection area in step S32, the information processing unit 30 performs control so that the projection image 5 does not shift from the projection area of the projection destination 4 due to movement of the user 1. When the projection area of the projection destination 4 is lost in the follow-up control of the projection area, the information processing unit 30 suspends the projection processing until another projection area of the projection destination 4 is extracted.

In step S34, the information processing unit 30 performs dynamic mapping of the projection image 5 on the projection area of the projection destination 4 extracted in step S30. In step S34, the information processing unit 30 may perform feedback processing so as to improve the visibility for the projection image 5 projected on the projection area of the projection destination 4 by using the surrounding image of the user 1, the information on the posture of the user 1, the image of the user 1, or the information obtained based on the shape of an object around the user 1, the distance to the object around the user 1, or the voice of the user 1, for example.

The visibility for the projection image 5 projected on the projection area of the projection destination 4 may be estimated by AI based on the surrounding image of the user 1, for example. The projection area of the projection destination 4 may be estimated as follows to have high visibility when the projection image 5 is projected.

The information processing unit 30 determines a candidate for the projection area of the projection destination 4. The information processing unit 30 controls the projection unit 40 so that a sample image is projected onto the candidate for the projection area of the projection destination 4. The projection unit 40 projects the sample image on the candidate for the projection area of the projection destination 4. The information acquisition unit 20 captures the sample image projected on the candidate for the projection area of the projection destination 4. Based on the captured sample image, the information processing unit 30 determines, as the projection area of the projection destination 4, the candidate for the projection area of the projection destination 4 with which the visibility for the projected sample images is high.

Then, the information processing unit 30 controls the projection unit 40 so that the projection image 5 is projected on the determined projection area of the projection destination 4 with which the visibility is high. Accordingly, the projection unit 40 can project the projection image 5 on the projection area of the projection destination 4 with high visibility. In the present embodiment, by providing feedback on a state of such a case where the sample image is actually projected on the projection area of the projection destination 4, a most suitable area having high visibility can be selected as the projection area of the projection destination 4 from a plurality of candidates for the projection area of the projection destination 4.

For example, in the present embodiment, the projection surface having high visibility does not always exist in front of the user 1, and the AR information is desired to be projected on the projection destination 4 desired by the user 1 or the projection destination 4 having high visibility according to a state of the user 1 or a surrounding situation. For example, in a construction site or a downtown street where there are many objects and of which a shape is complicated, when the projection destination 4 in front of the user 1 has properties unsuitable for projection, the user 1 may not visually recognize the projection image 5 projected. For example, a surface having such properties unsuitable for a projection includes a bright surface, a patterned surface, an uneven surface, a surface on which specular reflection occurs, a surface on which diffuse reflection hardly occurs, a surface that does not directly face the user 1, and a surface that does not have a background color such as white or black.

In addition, a surface having properties suitable for a projection and being easily visually recognized includes a dark surface, a uniform surface without a pattern, a flat surface, a surface on which specular reflection hardly occurs, a surface on which diffuse reflection easily occurs, a surface facing the user 1, and a surface having a background color such as white or black. For example, such properties of a projection surface may be estimated by referring to information registered in the Digital Twin. In addition to that, or in alternative to that, such properties of a projection surface may be estimated by performing image processing on the surrounding image captured by the peripheral camera 400. In addition to that, or in alternative to that, such properties of a projection surface may be estimated by using AI.

### Example 1

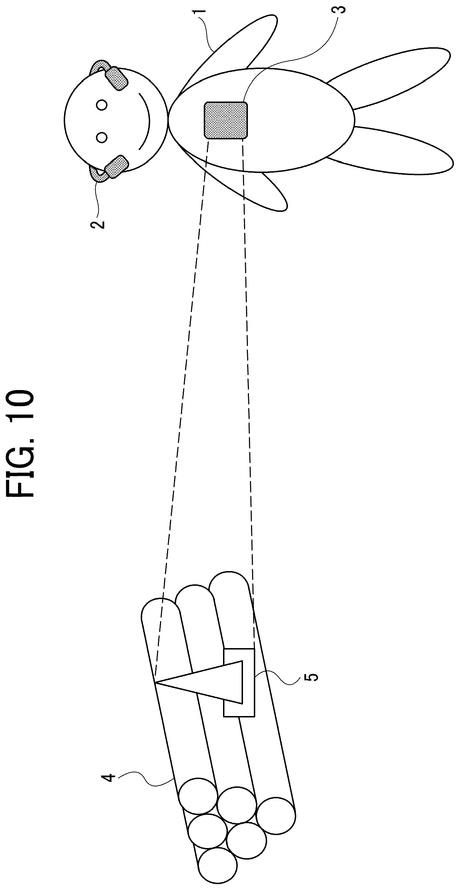

The information processing system according to the present embodiment can be utilized as, for example, an operation assist system for assisting an operation, a work, or a task, at a construction site. FIG. 10 is a diagram illustrating an example of an overview of an operation assist system for assisting an operation at a construction site. The user 1 who works at the construction site wears the head wearable device 2 and the body wearable device 3 and patrols the construction site.

The head wearable device 2 acquires information on a position of the user 1 who patrols the construction site. The body wearable device 3 projects, for example, the projection image 5 indicating a dangerous spot on the projection area of the projection destination 4 based on the information on the position of the user 1. As described above, according to the operation assist system according to the present embodiment, the projection image 5 can be projected on the projection area of the projection destination 4 so that the user 1 can easily visually recognize a dangerous spot in the construction site.

In the operation assist system according to the present embodiment, the projection unit 40 projects the projection image 5 on the projection area of the projection destination 4 at the construction site, and displaying the AR information in the real world can be implemented, accordingly.

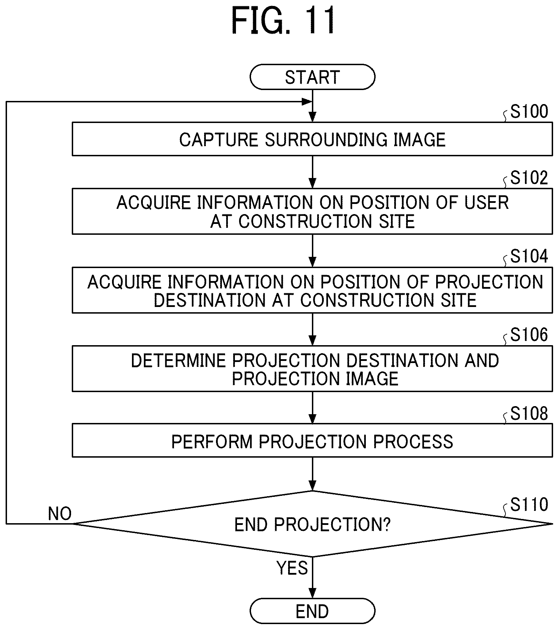

FIG. 11 is a flowchart illustrating an example of a process performed by the operation assist system that assists an operation performed at the construction site. The flowchart of FIG. 11 is an example in which the projection destination 4 and the projection image 5 to be projected onto the projection destination 4 are registered in advance as the information on the Digital Twin. For example, the flowchart of FIG. 11 corresponds to a process performed when the user 1 approaches a dangerous spot, and accordingly, the projection image 5 is projected on a projection area of the projection destination 4 registered in association with the dangerous spot.

In step S 100, the information acquisition unit 20 captures an image of surroundings of the user 1 who patrols the construction site. In addition, the information acquisition unit 20 acquires information on a posture of the user 1. The information acquisition unit 20 transmits the surrounding image of the user 1 and the information on the posture of the user 1 to the information processing unit 30.

In step S102, the information processing unit 30 acquires information on a position of the user 1 at the construction site based on the surrounding image of the user 1 and the information on the posture of the user 1 who patrols the construction site. In step S104, the information processing unit 30 acquires information on a position of a projection destination at the construction site based on the information on a position of the user 1 at the construction site and the information on the Digital Twin in the storage unit 50. The information on a position of a projection destination at the construction site indicates a position of the projection destination 4.

In step S106, the information processing unit 30 determines the projection destination 4 onto which the projection image 5 is to be projected based on the information on the Digital Twin in the storage unit 50 and the information on the position of the user 1 at the construction site. In step S106, the projection destination 4 is determined so as to be within a predetermined range from the users 1 who patrols the construction site, for example.

In step S106, the information processing unit 30 determines the projection image 5 to be projected on the projection area of the projection destination 4 based on information on the Digital Twin in the storage unit 50 and the information on the position of the user 1 at the construction site. In step S106, the projection image 5 associated with a target object that is the projection destination 4 is determined, for example. In step S106, when the projection destination 4 is registered in association with a dangerous spot of the construction site, the projection image 5 that causes the user 1 to visually recognize the dangerous spot is determined, for example.

In step S108, the information processing unit 30 controls the projection unit 40 so that the projection image 5 is projected on the projection area of the projection destination 4 determined in step S106. For example, in the step S108, when the user 1 who patrols the construction site approaches a dangerous spot of the construction site, the projection image 5 that causes the user 1 to visually recognize the dangerous spot can be projected on the projection area of the projection destination 4 registered in association with the dangerous spot. The processing of steps S100 to S 110 is repeated until the user 1 performs an operation to end the projection.

### Example 2

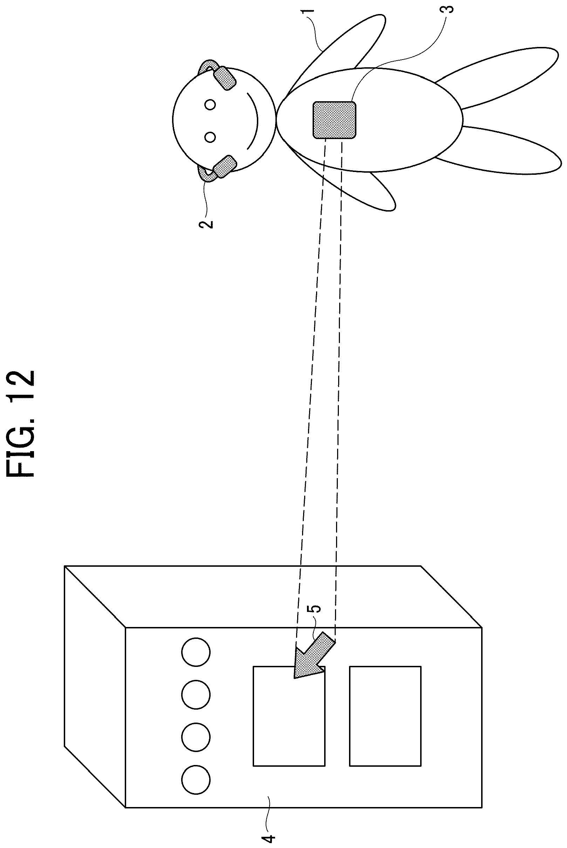

The information processing system according to the present embodiment can be utilized as, for example, an operation assist system for assisting an operation, a work, or a task, at a facility maintenance management site. FIG. 12 is a diagram illustrating an example of an overview of an operation assist system for assisting an operation at a facility maintenance management site. The user 1 who works at the facility maintenance management site wears the head wearable device 2 and the body wearable device 3 and patrols the facility maintenance management site.

The head wearable device 2 acquires information on a position of the user 1 who patrols the facility maintenance management site. The body wearable device 3 projects, for example, the projection image 5 indicating a part to be checked for facility maintenance management onto the projection destination 4 based on the information on the position of the user 1. The part to be checked for facility maintenance management may be referred to as a part for maintenance. The body wearable device 3 may project, for example, the projection image 5 indicating details of operation for the facility maintenance management onto the projection destination 4 based on the information on the position of the user 1.

As described above, according to the operation assist system according to the present embodiment, the projection image 5 can be projected onto the projection destination 4 so that the user 1 can easily visually recognize a part for maintenance in the facility maintenance management site. In addition, according to the operation assist system according to the present embodiment, the projection image 5 can be projected onto the projection destination 4 so that the user 1 can easily visually recognize the details of operation for the facility maintenance management in the facility maintenance management site.

In the operation assist system according to the present embodiment, the projection unit 40 projects the projection image 5 onto the projection destination 4 at the facility maintenance management site, and displaying the AR information in the real world can be implemented, accordingly.

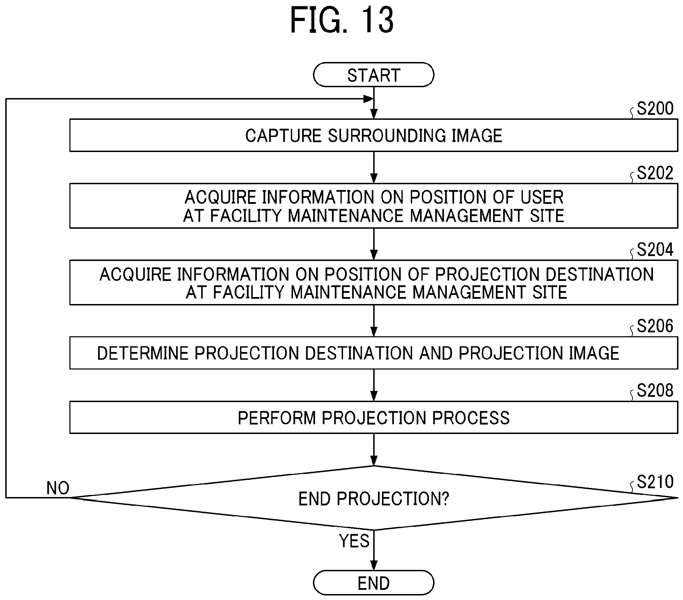

FIG. 13 is a flowchart illustrating an example of a process performed by the operation assist system that assists an operation performed at the facility maintenance management site. The flowchart of FIG. 13 is an example in which the projection destination 4 and the projection image 5 to be projected onto the projection destination 4 are registered in advance as the information on the Digital Twin. For example, the flowchart of FIG. 13 corresponds to a process performed when the user 1 approaches a part for maintenance that is a part to be checked for facility maintenance management, and accordingly, the projection image 5 is projected onto the projection destination 4 registered in association with the part for maintenance.

In step S200, the information acquisition unit 20 captures an image of surroundings of the user 1 who patrols the facility maintenance management site. In addition, the information acquisition unit 20 acquires information on a posture of the user 1.

The information acquisition unit 20 transmits the surrounding image of the user 1 and the information on the posture of the user 1 to the information processing unit 30.

In step S202, the information processing unit 30 acquires information on a position of the user 1 at the facility maintenance management site based on the surrounding image of the user 1 and the information on the posture of the user 1 who patrols the facility maintenance management site. In step S204, the information processing unit 30 acquires information on a position of a projection destination at the facility maintenance management site based on the information on a position of the user 1 at the facility maintenance management site and the information on the Digital Twin in the storage unit 50. The information on a position of a projection destination at the facility maintenance management site indicates a position of the projection destination 4.

In step S206, the information processing unit 30 determines the projection destination 4 onto which the projection image 5 is to be projected based on the information on the Digital Twin in the storage unit 50 and the information on the position of the user 1 at the facility maintenance management site. In step S206, the projection destination 4 is determined so as to be within a predetermined range from the users 1 who patrols the facility maintenance management site, for example.

In step S206, the information processing unit 30 determines the projection image 5 to be projected on the projection area of the projection destination 4 based on information on the Digital Twin in the storage unit 50 and the information on the position of the user 1 at the facility maintenance management site. In step S206, the projection image 5 associated with a target object that is the projection destination 4 is determined, for example. In step S206, when the projection destination 4 is registered in association with a part for maintenance of the facility maintenance management site, the projection image 5 that causes the user 1 to visually recognize the part for maintenance is determined, for example. In step S206, when the projection destination 4 is registered in association with a part for maintenance of the facility maintenance management site, the projection image 5 that causes the user 1 to visually recognize details of operation for the facility maintenance management to be performed with respect to the part for maintenance is determined, for example.

In step S208, the information processing unit 30 controls the projection unit 40 so that the projection image 5 is projected onto the projection destination 4 determined in step S206. For example, in the step S208, when the user 1 who patrols the facility maintenance management site approaches a part for maintenance, the projection image 5 that causes the user 1 to visually recognize the part for maintenance can be projected onto the projection destination 4 registered in association with the part for maintenance. For example, in the step S208, when the user 1 who patrols the facility maintenance management site approaches a part for maintenance, the projection image 5 that causes the user 1 to visually recognize details of operation to be performed at the part for maintenance can be projected. The processing of steps S200 to S210 is repeated until the user 1 performs an operation to end the projection.

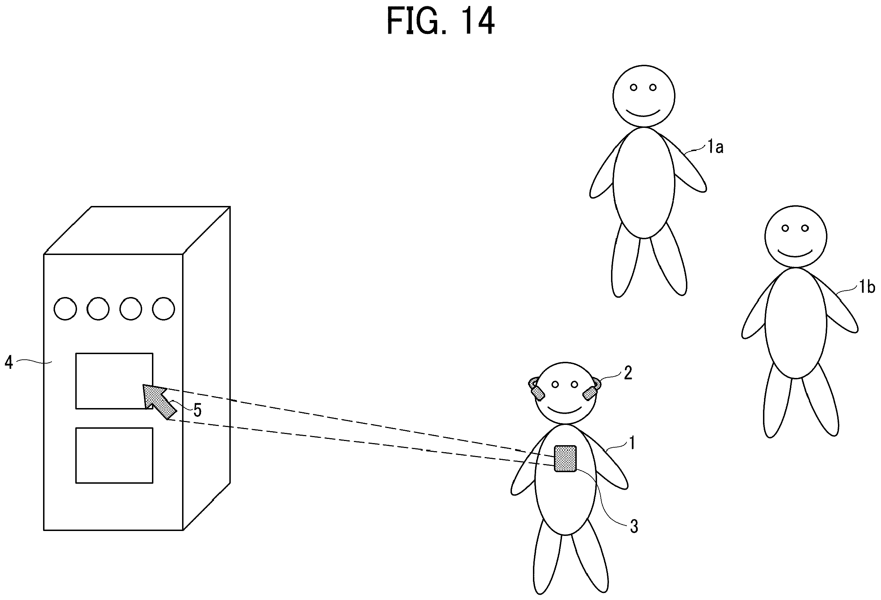

FIG. 14 is a diagram illustrating an example of an overview of an operation assist system for assisting an operation performed by a plurality of members, or users, at a facility maintenance management site. For example, when AR information is displayed by AR glasses, a user who wears the AR glasses alone can visually recognize the projection image 5. Accordingly, in displaying the AR information by the AR glasses, the other users who are not wearing the AR glasses does not visually recognize the projection image 5.

In the operation assist system according to the present embodiment, displaying the AR information in the real world is implemented by projecting the projection image 5 onto the projection destination 4 in the real world. Accordingly, when one of the plurality of users, or a member of a group wears the operation assist system according to the present embodiment, all the members of the group can visually recognize the AR information displayed.

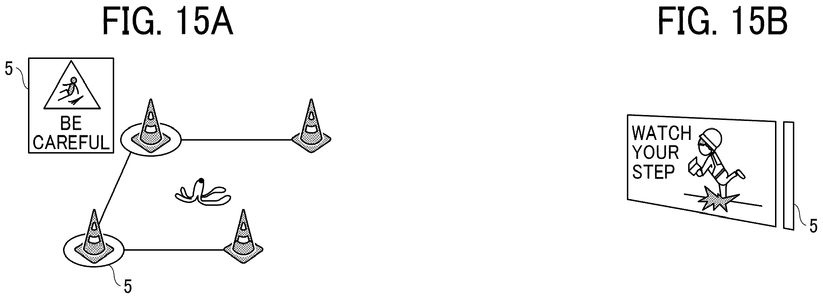

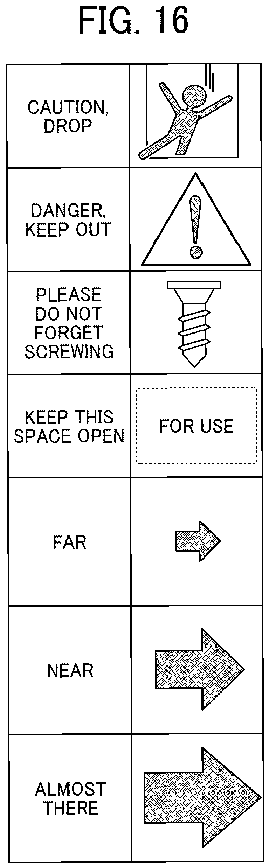

FIGS. 15A, 15B, and 16 are diagrams illustrating examples of projection images. FIGS. 15A, 15B, and 16 each illustrates an image of the projection image 5 at a construction site. The projection image 5 in each of FIGS. 15A, 15B, and 16 is an image indicating guidance, attention calling, or operation instruction for the user 1.

FIG. 15A is an example of the projection image 5 that causes the user 1 to visually recognize a dangerous object in the construction site. For example, by visually recognizing the projection image 5 illustrated in FIG. 15A, the user 1 can easily recognize the dangerous object in the construction site.

FIG. 15B is an example of the projection image 5 that causes the user 1 to visually recognize a signboard in the construction site. For example, by visually recognizing the projection image 5 illustrated in FIG. 15B, the user 1 can easily recognize the signboard in the construction site. The projection image 5 illustrated in FIG. 15B is an example of an annotation, and may be one that surrounds the signboard or one that blinks on and off. Other than the ones illustrated in FIG. 15, for example, various projection images 5 including one as illustrated in FIG. 16 may be used.

In addition, projecting the projection image 5 may be performed by performing annotation on the projection image 5 of the projection destination 4 that the user 1 does not notice or is not aware of. The projection image 5 of the projection destination 4 that the user 1 does not notice or is not aware of is estimated based on the line of sight of the user 1. Furthermore, the projection image 5 may be an image for causing the user 1 to recognize, for example, a direction or a distance in relation to the projection destination 4 that the user 1 does not notice or is not aware of.

The operation assist system according to the present embodiment can also be used at an educational site where AR information is desired to be shared by a plurality of users at the site, for example. For example, in a case where a class in which AR information is shared by using AR glasses at an educational site, the number of AR glasses corresponding to the number of persons participating in the class are used. According to the assist system of the present embodiment, for example, when one of the participants, for example, a teacher, wears the wearable device, all the participants in the class can visually recognize the AR information.

Each of the functions of the above-described embodiments may be implemented by one or more processing circuits or circuitry. In this specification, the "processing circuit or circuitry" in the present specification includes a programmed processor to execute each function by software, such as a processor implemented by an electronic circuit, and devices, such as an application specific integrated circuit (ASIC), a digital signal processor (DSP), a field programmable gate array (FPGA), and conventional circuit modules designed to perform the recited functions.

The apparatuses or devices described in the above-described embodiment are merely one example of plural computing environments that implement the embodiments disclosed herein. The present disclosure, however, is not limited to the above-described embodiments, and the constituent elements of the above-described embodiments include elements that may be easily conceived by those skilled in the art, those being substantially the same ones, and those being within equivalent ranges. Various omissions, substitutions, changes, and combinations of constituent elements can be made without departing from the gist of the above-described embodiments.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A wearable device, comprising:
a first device (2) wearable by a user; and
a second device (3) wearable by the user,
the first device (2) including a surrounding image capturing unit (22, 400) configured to capture a surrounding image having an image capture range including a range out of a visual field of the user,
the second device (3) including a projection unit (40, 414) configured to project a projection image determined based on the surrounding image onto a projection destination determined based on the surrounding image.

2. The wearable device of claim 1, wherein
the first device (2) further includes a posture acquisition unit (23, 406, 412) configured to obtain information on a posture of the user, and
the projection unit (40, 414) projects the projection image determined further based on the information on the posture of the user onto the projection destination determined further based on the information on the posture of the user.

3. The wearable device of any one of claims 1 and 2, further comprising
a user image capturing unit (24, 412) configured to capture a user image, the user image being an image of the user, and
wherein the projection unit (40, 414) projects the projection image determined further based on the user image onto the projection destination determined further based on the user image.

4. The wearable device of any one of claims 1 to 3, wherein
the second device (3) further includes a distance measurement unit (25, 410) configured to measure a distance to an object being around the user, and
the projection unit (40, 414) projects the projection image determined further based on the distance to the object being around the user onto the projection destination determined further based on the distance to the object being around the user.

5. The wearable device of any one of claims 1 to 4, wherein
a voice acquisition unit (26, 402) configured to obtain voice of the user,
the projection unit (40, 414) projects the projection image determined further based on the voice of the user onto the projection destination determined further based on the voice of the user.

6. The wearable device of any one of claims 1 to 5, wherein
the image capture range of the surrounding image captured by the surrounding image capturing unit (22, 400) includes an omnidirectional panoramic range and a full spherical range.

7. The wearable device of any one of claims 1 to 6, further comprising
an information processing unit (30, 408) configured to
obtain information on a position of the user based on the surrounding image;
obtain a plurality pieces of information in relation to a position of the projection destination from a storage unit (50, 6); and
cause the projection image determined further based on the information on the position of the user to be projected onto the projection destination determined further based on the information on the position of the user and the information in relation to the position of the projection destination.

8. The wearable device of claim 7, wherein
the information processing unit (30, 408) is included in the first device (2).

9. The wearable device of claim 1, wherein
the first device (2) and the second device (3) are separately wearable by the user and communicably connected to each other.

10. The wearable device of any one of claims 1 to 8, wherein
the wearable device (2, 3) is an operation assist apparatus that projects the projection image assisting an operation performed by the user onto the projection destination.

11. An information processing system, comprising:
the wearable device (2, 3) of claim 1; and
an information processing apparatus (7) communicably connected to the wearable device,
the information processing apparatus (7) being configured to:
obtain information on a position of the user based on the surrounding image;
obtain a plurality pieces of information in relation to a position of the projection destination from a storage unit (502, 503, 504, 515, 50, 6); and
cause the projection image determined based on the information on the position of the user to be projected onto the projection destination determined based on the information on the position of the user and the information on the position of the projection destination.

12. The information processing system of claim 11, wherein
the first device (2) and the second device (3) are separately wearable by the user and communicably connected to each other.

13. The information processing system of any one of claims 11 and 12, wherein
the information processing system is an operation assist system that projects the projection image assisting an operation performed by the user onto the projection destination.

14. An information processing method performed by a device wearable by a user, comprising:
capturing (S10, S50, S100, S200) a surrounding image having an image capture range including a range out of a visual field of the user; and
projecting (S18, S62, S108, S208) a projection image determined based on the surrounding image onto a projection destination determined based on the surrounding image.

15. A carrier means carrying computer readable codes for controlling a computer system to carry out the method of claim 14.
